# EUROPÄISCHE PATENTSCHRIFT

(11) **EP 3 634 730 B1**
(45) Veröffentlichungstag und Bekanntmachung des Hinweises auf die Patenterteilung: **08.01.2025**
(21) Anmeldenummer: 18731035.4
(22) Anmeldetag: 08.06.2018
(51) Int. Cl.: B29C 70/34, B29D 99/00, F03D 1/06

(54) **VERFAHREN ZUM HERSTELLEN EINES WINDENERGIEANLAGEN-ROTORBLATTES**
METHOD FOR PRODUCING A WIND TURBINE ROTOR BLADE
PROCÉDÉ POUR LA FABRICATION D'UNE PALE DE ROTOR POUR INSTALLATIONS ÉOLIENNES

(30) Priorität: 09.06.2017 DE 102017112721
(43) Veröffentlichungstag der Anmeldung: 15.04.2020
(73) Patentinhaber: Wobben Properties GmbH, 26607 Aurich (DE)
(72) Erfinder: STOPS, Florian, 39418 Staßfurt Neundorf (DE); BETHGE, Torsten, 39124 Magdeburg (DE)
(74) Vertreter: Eisenführ Speiser
(86) Internationale Anmeldenummer: PCT/EP2018/065131
(87) Internationale Veröffentlichungsnummer: WO 2018/224638

(56) Entgegenhaltungen:
- US-A1- 2007 040 294
- US-A1- 2009 169 392
- US-A1- 2015 314 537
- US-A1- 2016 040 651

## Beschreibung

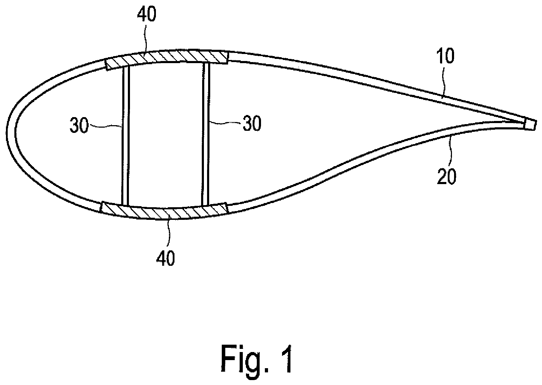

Fig. 1 zeigt einen schematischen Querschnitt eines Rotorblatts einer Windenergieanlage. Das Rotorblatt besteht typischerweise aus zwei Schalen, wobei eine erste Schale 10 die Saugseite und eine zweite Schale 20 die Druckseite darstellt. Ferner weist das Rotorblatt jeweils einen Holmgurt 40 an der Saugseite und der Druckseite sowie Stege 30 auf, welche die Holmgurte 40 an der Saugseite und Druckseite miteinander verbinden. Die Holmgurte 40 sind dabei mit dem Material der Saugseite und/oder Druckseite fest verbunden.

DE 10 2009 047 570 A1 beschreibt einen Holmgurt einer Windenergieanlage sowie die Herstellung eines derartigen Holmgurtes. Der Holmgurt besteht aus einer Mehrzahl von Einzellagen aus einem Glasfaser- oder Kohlenfasergelege, welche in einer Form platziert werden. Anschließend wird eine Vakuumfolie platziert und Epoxidharz wird durch das das Volumen, welches durch die Form und die Vakuumfolie begrenzt ist, infundiert. Wenn das Harz getrocknet ist, dann kann der Gurt weiterverwendet werden. Der Gurt kann dann an einer Innenseite der ersten oder zweiten Schale (Saugseite oder Druckseite) vorgesehen werden. Die Seitenwände der Form können eine leichte Neigung aufweisen, so dass die Enden des Holmgurtes ebenfalls leicht geneigt sein können.

Bei der Herstellung von Holmgurten sollen die einzelnen Gelegebahnen quer geschäftet werden. Zur Erreichung der Schäftung können Schaumkeile oder Schaumdreiecke in unterschiedlichen Dicken verwendet werden.

Typischerweise werden die Gurte mit einem geraden Rand bzw. Ende vorgesehen. Dazu wird ein erster Keil aus einem weicheren Material vorgesehen und auf dem ersten Keil kann ein zweiter Keil mit einem härteren Material vorgesehen werden, so dass der Gurt an seinem Außenbereich ein weicheres Material aufweist.

Typischerweise werden die Gurte im Querschnitt rechteckig gefertigt. Während dieses Prozesses kann eine Querschäftung durch Schaumkeile simuliert werden, insbesondere an den Rändern kann der Schaumstoffkeil vorgesehen werden. Dies ist jedoch hinsichtlich der Transportierbarkeit der Holmgurte nachteilig, da die weichen Schaumkeile beschädigt werden können.

Beim Herstellen des Holmgurtes kann eine untere Glasfaserlage eingelegt und an den Formrändern kann ein Schaumstoffstreifen platziert werden. Dieser Schaumstoffstreifen ist dann als Keil ausgestaltet, welcher nach innen negativ reingeschäftet worden ist. In diese negative Schäftung kann dann das Glasgelege platziert werden. Die Glasfasergelege, welche den Hauptteil des Holmgurtes ausbilden, müssen in Querrichtung geschäftet werden, um weiche Übergänge zwischen dem als strukturellen Bauteil ausgestalteten Holmgurt und dem Sandwich vorzusehen, welches an der Blattober und -unterkante angrenzt. Der Schaumstreifen, welcher am Rand des Holmgurtes vorgesehen wird, kann eine unterschiedliche Dicke aufweisen, wodurch er sehr teuer in der Herstellung ist.

In der prioritätsbegründenden deutschen Patentanmeldung hat das Deutsche Patent- und Markenamt die folgenden Dokumente recherchiert: DE 10 2009 047 570 A1, DE 10 2012 219 226 A1, DE 10 2010 002 432 A1, DE 103 36 461 A1 und US 2017/0 001 387 A1.

Beim Einbau des Gurtes in ein Rotorblatt einer Windenergieanlage kann ein Schaumstoffkeil bzw. ein Schaumteil verwendet. Dieses Schaumteil kann einen Harzkanal aufweisen. Anschließend kann Kernmaterial vorgesehen sein.

US 2015/314537 A1 zeigt ein Verfahren zum Herstellen eines Windenergieanlagen-Rotorblattes, wobei eine Form für einen Holmgurt vorgesehen wird. Der Gurt wird mit zwei Lippen vorgesehen und der Gurt ist in ein Kernmaterial eingebettet.

Es ist eine Aufgabe der vorliegenden Erfindung, ein Verfahren zur verbesserten Herstellung eines Windenergieanlagen-Rotorblattes vorzusehen. Insbesondere ist es eine Aufgabe der vorliegenden Erfindung, die Herstellung von Holmgurten für Windenergieanlagen-Rotorblätter zu verbessern.

Diese Aufgabe wird durch ein Verfahren zum Herstellen eines Windenergieanlagen-Rotorblattes gemäß Anspruch 1 gelöst.

Somit wird ein Verfahren zum Herstellen eines Windenergieanlagen-Rotorblattes vorgesehen. Eine Form für einen Holmgurt wird bereitgestellt. Die Form weist mindestens einen negativen Gurtrand auf. Glasfaserlagen werden in die Form und den negativen Gurtrand eingelegt, um eine Querschäftung an den Enden der Glasfaserlagen zu erreichen, so dass ein Holmgurt mit einer negativen Schäftung vorgesehen wird. Der Holmgurt mit der negativen Schäftung wird in ein Kernmaterial des Rotorblattes eingebaut. Der Gurtrand weist einen Winkel zwischen 20° und 40° auf.

Gemäß einem Aspekt der vorliegenden Erfindung weist die Form ein Teil auf, welches eine Schäftung aufweist.

Gemäß einem weiteren Aspekt der vorliegenden Erfindung weist die Form mindestens einen Harzkanal auf.

Die Erfindung betrifft den Gedanken, einen Holmgurt für ein Windenergieanlagen-Rotorblatt ohne Schaumstreifen an den Enden des Holmgurtes vorzusehen. Dies kann insbesondere dadurch erreicht werden, dass die Schaumkeile als Teil der Form vorgesehen sind bzw. die Keile oder Schaumkeile in die Form zum Herstellen des Holmgurtes bereits integriert sind. Dies führt zwar zu einer komplizierteren Form, verbessert jedoch das Herstellverfahren bzw. die Herstellung des Holmgurtes. In die erfindungsgemäße Form können dann Glasfaserlagen geschäftet werden. Insbesondere können die Glasfasergelegelagen an dem negativen Gurtrand hochgeschäftet werden. Damit kann eine gewünschte Querschäftung erreicht werden. Die dabei erhaltene Abformung kann zu einer maschinell hergestellten Sandwich-Schaumform passen, wobei der Sandwich-Schaum unter bzw. in die Negativschäftung eingeführt werden kann.

Gemäß der Erfindung wird der Holmgurt mit einer negativen Schäftung hergestellt. Der Holmgurt kann aus Glasfasergelegen hergestellt werden und das Material des Holmgurtes stellt somit ein hartes Material bzw. ein ausgehärtetes Material dar.

Das Schaumteil kann eine Schäftung und einen Harzkanal aufweisen. Das Schaumteil, welches für das Vorsehen des Harzkanals verwendet wird, kann positiv geschäftet werden, so dass dies dann mit der negativen Schäftung des Holmgurtes zusammenpasst. Hierbei kann ein Übergang zwischen einem harten und einem weichen Material am Übergang zwischen dem Gelege des Holmgurtes und dem Schaumteil vorgesehen sein.

Durch die erfindungsgemäße Herstellung des Holmgurtes werden keine zusätzlichen Kernmaterialstreifen zum Höhenausgleich benötigt. Die Querschäftungen der einzelnen Gelegebauteile werden beibehalten, ein spaltfreier Formschluss zum Kernmaterial der Rotorschale wird gewährleistet und das Bauteil kann besäumfrei gefertigt werden.

Gemäß einem Aspekt der Erfindung stellt eine Schäftung ein Ende eines Teils oder Elementes (z. B. des Holmgurtes) dar, das in einem spitzen Winkel abgeschrägt ist. Durch die Schäftung können Schälspannungen reduziert werden, so dass die Festigkeit der Verbindung gesteigert wird.

Während im Stand der Technik Holmgurte typischerweise in einer Kastenform hergestellt werden und am Holmgurtübergang zum Kernmaterial Gurtrandstreifen verwendet werden, kann es zu Spalten zwischen dem Holmgurt und dem Kernmaterial kommen. Im Gegensatz dazu wird mit der erfindungsgemäßen Querschäftung der Gelege eine fest definierte Gelegebreite des Holmgurtes vorgesehen, welcher in Querrichtung abgestuft bzw. geschäftet ist. Damit kann ein formschlüssiger und im Wesentlicher spaltfreier Übergang zwischen dem Kernmaterial, der Rotorblattschale und dem Holmgurt vorgesehen werden. Dies wird insbesondere durch die negative Schäftung des Holmgurtes erreicht.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt einen schematischen Querschnitt eines Windenergieanlagen-Rotorblattes gemäß dem Stand der Technik,
- Fig. 2: zeigt eine schematische Darstellung einer Windenergieanlage gemäß der Erfindung,
- Fig. 3A: zeigt eine schematische Schnittansicht eines Teils eines Rotorblattes,
- Fig. 3B: zeigt eine schematische Schnittansicht A-A von Fig. 3A,
- Fig. 3C: zeigt eine schematische Schnittansicht B-B des Schnitts von Fig. 3A,
- Fig. 4A: zeigt eine schematische Schnittansicht eines Holmgurtes bei seiner Herstellung,
- Fig. 4B: zeigt eine weitere schematische Schnittansicht eines Holmgurtes bei seiner Herstellung,
- Fig. 4C: zeigt eine weitere schematische Schnittansicht eines Holmgurtes bei seiner Herstellung, und
- Fig. 5: zeigt einen schematischen Querschnitt eines Teils eines Rotorblattes gemäß einem Ausführungsbeispiel der Erfindung.

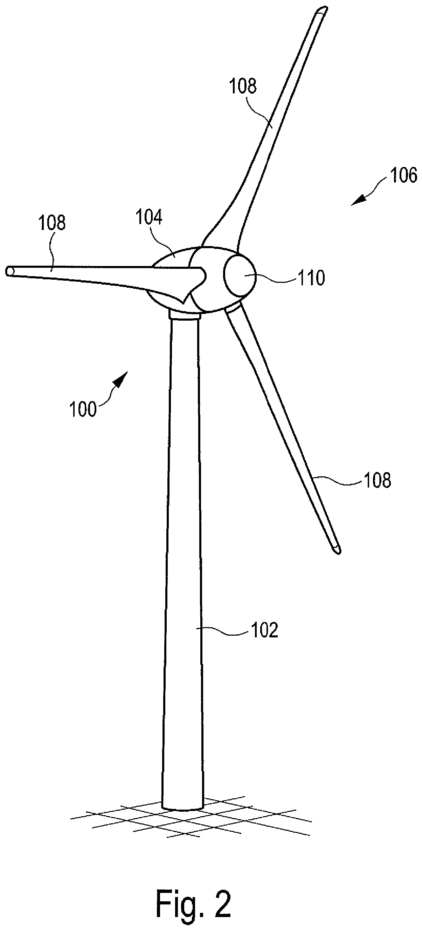

Fig. 2 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

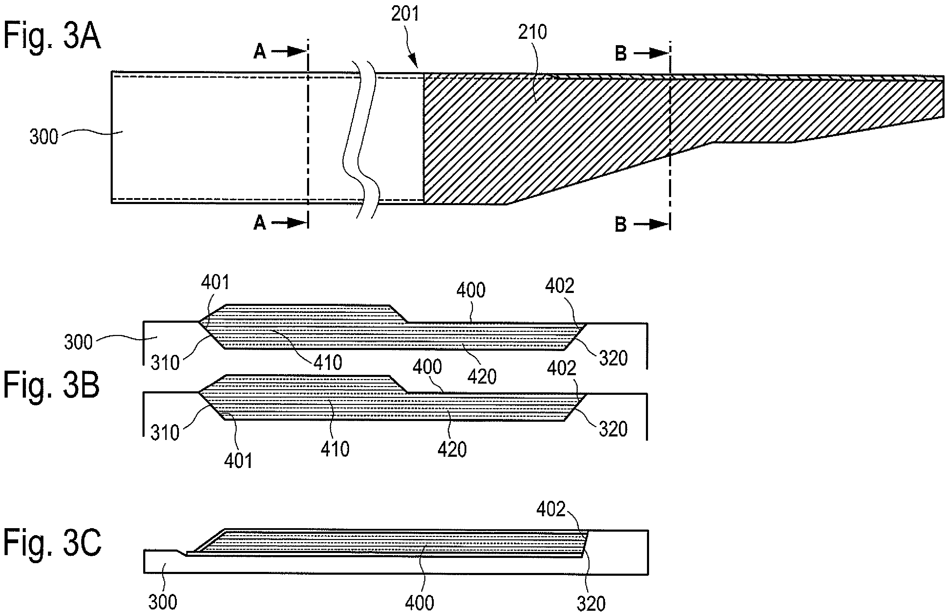

Fig. 3A bis 3D zeigen verschiedene schematische Schnittansichten eines Teils des Rotorblattes 200 gemäß der Erfindung bei der Herstellung eines Holmgurtes. In Fig. 3B ist eine schematische Schnittansicht entlang des Schnitts A - A und in Fig. 3C ist eine schematische Schnittansicht entlang des Schnitts B - B gezeigt.

Das erfindungsgemäße Verfahren zum Herstellen eines Holmgurtes 400 für ein Rotorblatt 200 einer Windenergieanlage verwendet eine Form 300 mit speziell ausgestalteten Formrändern 310, 320. In den Fig. 3A bis 3C ist eine Vorderkante 201 des Holmgurtes gezeigt. Ferner ist ein Kernmaterial 210 des Rotorblattes 200 in Fig. 3A gezeigt. In Fig. 3B und 3C ist die Form 300 mit den Formrändern 310, 320 sowie der Holmgurt 400 mit einem ersten und zweiten Ende 401, 402 gezeigt.

Gemäß einem Aspekt der vorliegenden Erfindung kann der Winkel eines ersten Formrandes 310 35° und der Winkel eines zweiten Formrandes 320 22° betragen. Gemäß einem Aspekt der vorliegenden Erfindung können diese Winkel gleichbleibend ausgestaltet sein.

In Fig. 3B kann ein schmaler Gurt 410 und/oder ein breiter Gurt 420 vorgesehen sein.

In Fig. 3C ist eine alternative Ausgestaltung der Form 300 mit einem zweiten Formrand 320 vorgesehen.

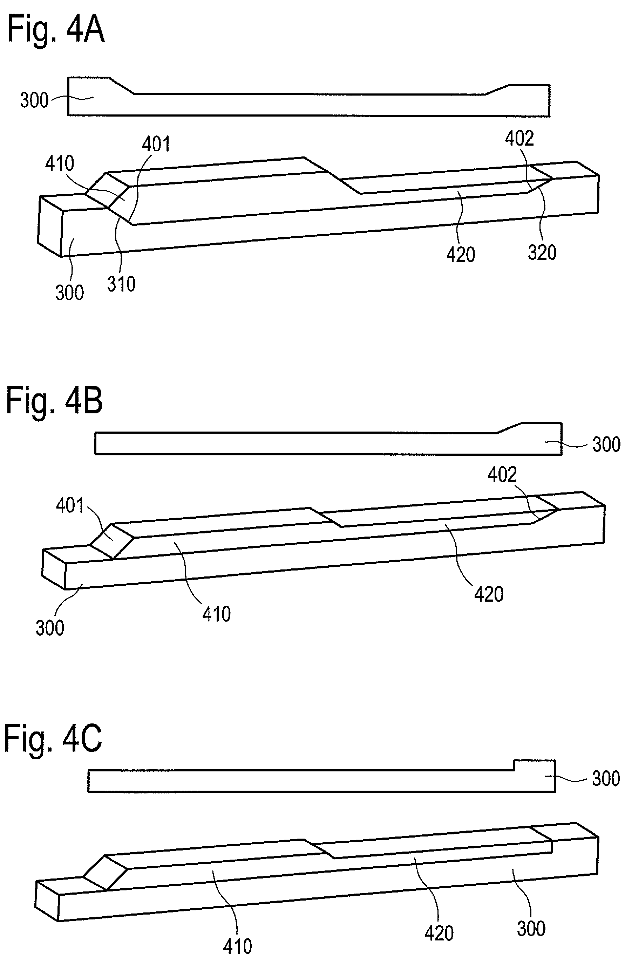

Fig. 4A bis 4C zeigen verschiedene schematische Schnittansichten eines Holmgurtes gemäß der Erfindung. In den Figs. 4A bis 4C ist jeweils die Form 300 (oben) sowie die Form 300 mit dem Holm 400 gezeigt. Die Ausgestaltung der Form 300 und des Holmgurtes 400 gemäß Fig. 4A entspricht im Wesentlichen der Ausgestaltung der Form und des Holmgurtes von Fig. 3B. Die Ausgestaltung der Form und des Holmgurtes gemäß Fig. 4B entspricht im Wesentlichen der Ausgestaltung der Form 300 und des Holmgurtes 400 von Fig. 3C.

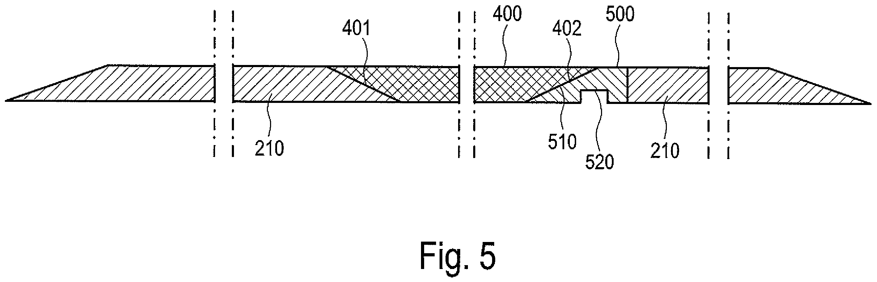

Fig. 5 zeigt einen schematischen Querschnitt eines Teils eines Rotorblattes gemäß einem Ausführungsbeispiel der Erfindung. In Fig. 5 ist Kernmaterial 210, ein Holmgurt 400 mit einem ersten und zweiten Ende 401, 402 sowie optional einem Schaumeinleger 500 dargestellt. Das erste und zweite Ende 401, 402 des Holmgurtes weisen jeweils eine negative Schäftung auf. Der Schaumeinleger 500 weist ein schräges Ende 510 und optional einen Harzkanal 520 auf. Der Harzkanal 520 kann an der gegenüberliegenden Seite zu dem Ende 510 vorgesehen sein.

Wie in Fig. 5 zu sehen, ist ein Holmgurt 400 mit seinen beiden Enden, welche jeweils eine negative Schäftung aufweisen, in einem Kernmaterial 210 des Rotorblattes vorgesehen. Durch den flachen Winkel des Holmgurtes in Kombination mit der des Kernmaterials 210 wird ein großflächiger formschlüssiger und spaltfreier Übergang zwischen dem Holmgurt und dem Kernmaterial des Rotorblattes ermöglicht werden.

## Patentansprüche

1. Verfahren zum Herstellen eines Windenergieanlagen-Rotorblattes (200), mit den Schritten:
Bereitstellen einer Form (300) für einen Holmgurt (400),
wobei die Form (300) mindestens einen negativen Gurtrand (310, 320) aufweist,
Einlegen von Glasfaserlagen in die Form (300) und den negativen Gurtrand (310, 320), um eine Querschäftung an den Enden der Glasfaserlagen zu erreichen, so dass ein Holmgurt (400) mit einem ersten und zweiten Ende (401, 402) vorgesehen wird, wobei das erste und/oder zweite Ende (401, 402) eine negativen Schäftung aufweist, und
formschlüssiges Einbauen des ersten und/oder zweiten Endes (401, 402) des Holmgurtes (400) in ein Kernmaterial (210) des Rotorblattes (200),
wobei der Gurtrand (310, 320) einen Winkel zwischen 20° und 40° aufweist.

2. Verfahren zum Herstellen eines Windenergieanlagen-Rotorblattes nach Anspruch 1, wobei
die Form (300) ein Teil aufweist, welches die Schäftung aufweist.

3. Verfahren zum Herstellen eines Windenergieanlagen-Rotorblattes nach Anspruch 1 oder 2, wobei
in der Form (300) mindestens ein Harzkanal vorgesehen ist.

## Claims

1. A method of producing a wind turbine rotor blade (200) comprising the steps:
providing a mould (300) for a spar cap (400),
wherein the mould (300) has at least one negative cap edge (310, 320),
laying glass fibre layers in the mould (300) and the negative cap edge (310, 320) to achieve transverse scarfing at the ends of the glass fibre layers in such a way that a spar cap (400) having a first and a second end (401, 402) is provided, wherein the first and/or second end (401, 402) has a negative scarfing, and
positively lockingly installing the first and/or second end (401, 402) of the spar cap (400) in a core material (210) of the rotor blade (200), wherein
the cap edge (310, 320) has an angle of between 20° and 40°.

2. A method of producing a wind turbine rotor blade according to claim 1 wherein
the mould (300) has a portion which has the scarfing.

3. A method of producing a wind turbine rotor blade according to claim 1 or claim 2 wherein
there is provided at least one resin passage in the mould (300).

## Revendications

1. Procédé de fabrication d'une pale de rotor d'éolienne (200), avec les étapes :
de fourniture d'un moule (300) pour une bride de longeron (400),
dans lequel le moule (300) présente au moins un bord de longeron négatif (310, 320),
de placement de couches de fibres de verre dans le moule (300) et dans le bord de longeron négatif (310, 320) pour obtenir une monture transversale sur les extrémités des couches de fibres de verre de telle sorte qu'une bride de longeron (400) est prévue avec une première et une seconde extrémité (401, 402), dans lequel la première et/ou la seconde extrémité (401, 402) présentent une monture négative, et
l'intégration par complémentarité de forme de la première et/ou de la seconde extrémité (401, 402) de la bride de longeron (400) dans un matériau central (210) de la pale de rotor (200),
dans lequel le bord de longeron (310, 320) présente un angle entre 20° et 40°.

2. Procédé de fabrication d'une pale de rotor d'éolienne selon la revendication 1, dans lequel
le moule (300) présente une partie, laquelle présente la monture.

3. Procédé de fabrication d'une pale de rotor d'éolienne selon la revendication 1 ou 2, dans lequel
au moins un canal de résine est prévu dans le moule (300).
